# EUROPEAN PATENT APPLICATION

(11) **EP 3 255 311 A1**
(43) Date of publication of application: **13.12.2017**
(21) Application number: 16746579.8
(22) Date of filing: 01.02.2016
(51) Int. Cl.: F16H 25/24, B22F 3/02, F16B 21/18, F16H 25/20, H02K 7/06, H02K 7/116, C22C 33/02

(54) **ELECTRIC ACTUATOR**

(30) Priority: 02.02.2015 JP 2015018666
(71) Applicant: NTN Corporation, Osaka-shi, Osaka 550-0003 (JP)
(72) Inventor: SHIMIZU, Tatsunori, Iwata-shi Shizuoka 438-8510 (JP)
(74) Representative: Cohausz & Florack
(86) International application number: PCT/JP2016/052941
(87) International publication number: WO 2016/125748

(57) **Abstract**

An object of the present invention is to provide an electric actuator which can improve the maintenance workability and reduce the manufacturing cost owing to simple structure. According to the present invention, there is provided an electric actuator comprising a housing formed of aluminum light alloy; an electric motor mounted on the housing; a speed reduction mechanism for transmitting rotational driving power of the motor to a ball screw mechanism; the ball screw mechanism being able to convert the rotational motion of the electric motor to the axial linear motion of a driving shaft and comprising a nut formed with a helical screw groove on its inner circumference and supported rotationally but axially immovably relative to the housing by supporting bearings mounted on the housing and a screw shaft coaxially integrated with the driving shaft, formed with a helical screw groove on its outer circumference corresponding to the helical screw groove of the nut and inserted in the nut via a plurality of balls; and a cylindrical sleeve fitted in a blind bore formed in the housing accommodating the screw shaft; the sleeve being formed on its inner circumference with a pair of axially extending recessed grooves at diametrically opposite positions for receiving a guide pin mounted on one end of the screw shaft to guide the screw shaft so that it is able to move axially but not rotationally relative to the housing characterized in that an annular groove is formed on the open end of the blind bore of the housing and the sleeve is axially immovably secured by a annular stopper ring fitted in the annular groove; that the stopper ring is formed with one notch and a recess is formed on the inner circumference of the stopper ring near each of opposite ends of the notch for enabling a detaching tool to be engaged; and that the contour of each recess comprises a circular arc portion having a predetermined radius of curvature and a flat portion extending tangentially from the circular arc portion and the width of the opening of the recess is smaller than the diameter of the circular arc portion.

## Description

### Field of the Invention

The present invention relates to an electric actuator used in motors in general industries and driving sections of automobiles etc. for converting a rotary motion from an electric motor to a linear motion of a driving shaft via the ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and simultaneously size of electric motor and power consumption are also increased. Thus, the ball screw mechanisms have been widely used as more efficient actuators.

For example in an electric actuator of the prior art, an output member connected to a nut can be axially moved by rotating a ball screw shaft forming a ball screw mechanism using an electric motor mounted on a housing. Since friction of the ball screw mechanism is very low and the ball screw shaft tends to be easily rotated by thrust load acting on the output member, it is necessary to hold the position of the output member during the electric motor is stopped.

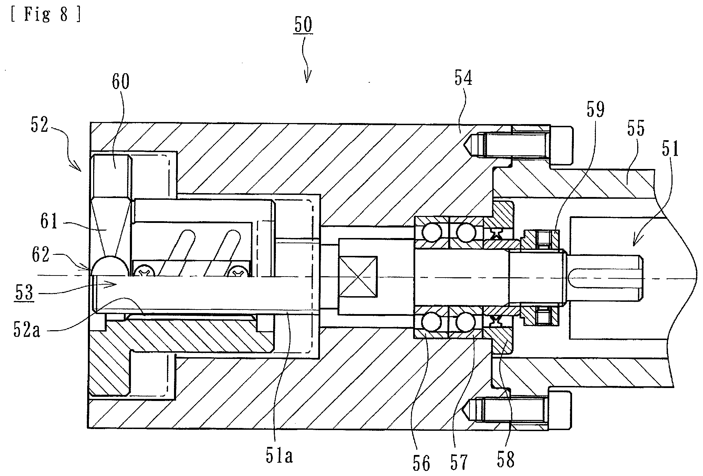

For example, the electric motor is provided with a braking means or a power transmitting means of low mechanical efficiency such as a worm gear is provided for solving such a problem and a representative electric actuator 50 is shown in Fig. 8. The electric actuator 50 adopts a ball screw mechanism 53 comprising a ball screw shaft 51 rotationally driven by an electric motor (not shown) and a ball screw nut 52 mated with the ball screw shaft 51 via balls (not shown). When a motor shaft (not shown) of the electric motor is rotated, the ball screw shaft 51 connected to the motor shaft is rotated and linearly moves the ball screw nut 52 to left and right directions.

The ball screw shaft 51 is rotationally supported on cylindrical housings 54, 55 via two rolling bearings 56, 57. These rolling bearings 56, 57 are secured by a rotation locking member 59 for looseness prevention via a securing cover 58.

The ball screw shaft 51 is formed on its outer circumference with a helical screw groove 51a and mated with the ball screw nut 52 via balls. The ball screw nut 52 is also formed on its inner circumference with a helical screw groove 52a and on its end a larger diameter portion 60.

Flat portions 61 are formed on the outer circumference of the larger diameter portion 60. A cam follower (rotation locking means) 62 is projected radially outward from the flat portion 61 substantially at its center.

Since the cam follower 62 is fitted in a notched portion, entrainment of the ball screw nut 52 accompanied with rotation of the ball screw shaft 51 is prevented. In addition, since the cam follower 62 can rotationally slide relative to the notched portion, sliding friction and sliding wear can be reduced (e.g. see Patent Document 1 below).

Although the electric actuator 50 of the prior art has advantages described above and is able to achieve the lower driving torque, it is a problem to increase the manufacturing cost due to use of rolling bearings in the cam follower. In addition, anti-wear means is required when the housing 54 uses aluminum material.

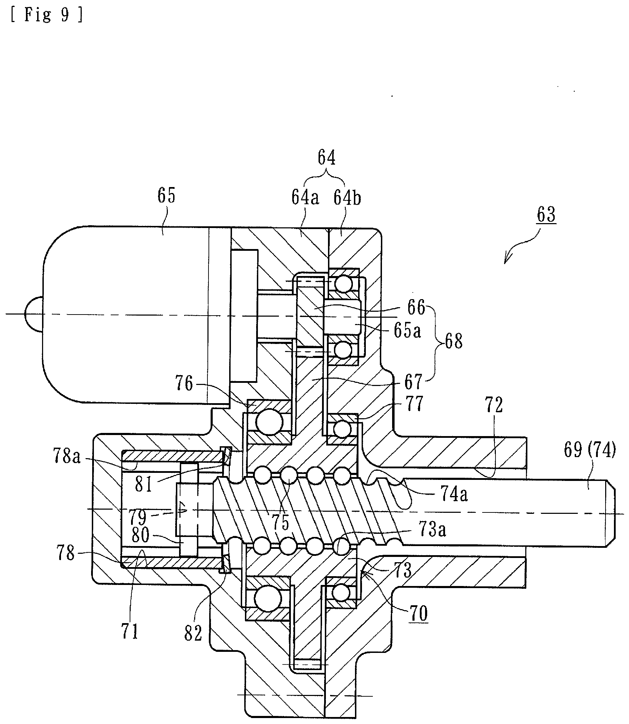

Accordingly, it has been proposed an electric actuator 63 shown in Fig. 9 in order to reduce the sliding friction and wear and its manufacturing cost due to a simple structure. The electric actuator 63 comprises a cylindrical housing 64, an electric motor 65 mounted on the housing 64, a speed reduction mechanism 68 comprising a pair of spur gears 66, 67 for transmitting the rotational power of the electric motor 65 via a motor shaft 65a, and a ball screw mechanism 70 for converting the rotational motion of the electric motor 65 to the axial linear motion of a driving shaft 69.

The housing 64 is formed of aluminum alloy such as A 6063 TE, ADC 12 etc. and comprises a first housing 64a and a second housing 64b abutted and bolted to an end face of the first housing 64a by securing bolts (not shown). The electric motor 65 is mounted on the first housing 64a. The first housing 64a and the second housing 64b are formed with a blind bore 71 and a through bore 72 and respectively for accommodating a screw shaft 74.

A smaller spur gear 66 is press-fitted onto the end of the motor shaft 65a of the electric motor 65 and a larger spur gear 67 is formed integrally with a nut 73 forming part of the ball screw mechanism 70 and meshes with the smaller spur gear 66. The driving shaft 69 is integrated with the screw shaft 74 forming part of the ball screw mechanism 70.

The ball screw mechanism 70 comprises the screw shaft 74 and the nut 73 inserted on the screw shaft 74 via balls 75. The screw shaft 74 is formed on its outer circumference with a helical screw groove 74a and supported axially movably but not rotationally. On the other hand, the nut 73 is formed on its inner circumference with screw groove 73a corresponding to the screw groove 74a of the screw shaft 74 and a large number of balls 75 are rollably contained between the screw grooves 73a and 74a. The nut 73 is supported by two supporting bearings 76, 77 rotationally but axially immovably relative to the housing 64.

A cylindrical sleeve 78 is fitted into the blind bore 71 of the first housing 64a. The sleeve 78 is formed of sintered alloy formed by an injection molding machine with plastically preparing metallic powder. In the injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted state and finally formed to the sleeve by a so-called MIM (Metal Injection Molding) method.

The sleeve 78 is formed with a pair of axially extending recessed grooves 78a arranged at diametrically opposite positions. On the other hand, a guide pin 80 is fitted in a radially through aperture 79 formed at the end of the screw shaft 74. An annular groove 81 is formed on the open end of the blind bore 71 of the housing 64a and the sleeve 78 is axially immovably secured by an annular stopper ring 82 fitted in the annular groove 81. The side surfaces of the stopper ring 82 are not flat similar to a usual C-shaped stopper ring and has a bent cross-section having a vertex at a central position symmetric about a notch of the stopper ring 82.

As described above, since the rotation locking mechanism is constituted by the guide pin 80 and the sleeve 78 of sintered metal fitted in the first housing 64a of aluminum light alloy, it is possible to reduce the sliding friction and wear of the aluminum housing 64a as well as the manufacturing cost owing to its simple structure.

In addition, since axial movement of the sleeve 78 is prevented by the urging spring force of the stopper ring 82 against the sleeve 78, generation of vibration and noise can be prevented (see e.g. Patent Document 2 below).

### Documents of the Prior Art

### Patent Documents

Patent Document 1: JP 2007 -333046 A
Patent Document 2: JP 2013 -167334 A
Disclosure of the Invention

### Problems to be solved by the Invention

However, in the electric actuator 63 of the prior art, it is a problem that the stopper ring 82 cannot easily removed from the first housing 64a without damaging the housing 64a once the stopper ring 82 having been attached to the housing 64a and accordingly the removal operability and thus maintenance workability of the electric actuator 63 would be impaired.

It is, therefore, an object of the present invention to provide an electric actuator which can improve the maintenance workability and reduce the manufacturing cost owing to simple structure.

### Means for solving the Problems

For achieving the object of the present invention, there is provided according to the present invention of claim 1, an electric actuator comprising a housing formed of aluminum light alloy; an electric motor mounted on the housing; a speed reduction mechanism for transmitting rotational driving power of the motor to a ball screw mechanism; the ball screw mechanism being able to convert the rotational motion of the electric motor to the axial linear motion of a driving shaft and comprising a nut formed with a helical screw groove on its inner circumference and supported rotationally but axially immovably relative to the housing by supporting bearings mounted on the housing and a screw shaft coaxially integrated with the driving shaft, formed with a helical screw groove on its outer circumference corresponding to the helical screw groove of the nut and inserted in the nut via a plurality of balls; and a cylindrical sleeve fitted in a blind bore formed in the housing accommodating the screw shaft; the sleeve being formed on its inner circumference with a pair of axially extending recessed grooves at diametrically opposite positions for receiving a guide pin mounted on one end of the screw shaft to guide the screw shaft so that it is able to move axially but not rotationally relative to the housing characterized in that an annular groove is formed on the open end of the blind bore of the housing and the sleeve is axially immovably secured by a annular stopper ring fitted in the annular groove; that the stopper ring is formed with one notch and a recess is formed on the inner circumference of the stopper ring near each of opposite ends of the notch for enabling a detaching tool to be engaged therewith; and that the contour of each recess comprises a circular arc portion having a predetermined radius of curvature and a flat portion extending tangentially from the circular arc portion and the width of the opening of the recess is smaller than the diameter of the circular arc portion.

According to the electric actuator of claim 1, since it comprises a housing formed of aluminum light alloy; an electric motor mounted on the housing; a speed reduction mechanism for transmitting rotational driving power of the motor to a ball screw mechanism via a motor shaft; the ball screw mechanism being able to convert the rotational motion of the electric motor to the axial linear motion of a driving shaft and comprising a nut formed with a helical screw groove on its inner circumference and supported rotationally but axially immovably relative to the housing by supporting bearings mounted on the housing and a screw shaft coaxially integrated with the driving shaft, formed with a helical screw groove on its outer circumference corresponding to the helical screw groove of the nut and inserted in the nut via a plurality of balls; and a cylindrical sleeve fitted in a blind bore formed in the housing accommodating the screw shaft; the sleeve being formed on its inner circumference with a pair of axially extending recessed grooves at diametrically opposite positions for receiving a guide pin mounted on one end of the screw shaft to guide the screw shaft so that it is able to move axially but not rotationally relative to the housing and is characterized in that an annular groove is formed on the open end of the blind bore of the housing and the sleeve is axially immovably secured by a annular stopper ring fitted in the annular groove; that the stopper ring is formed with one notch and a recess is formed on the inner circumference of the stopper ring near each of opposite ends of the notch for enabling a detaching tool to be engaged; and that the contour of each recess comprises a circular arc portion having a predetermined radius of curvature and a flat portion extending tangentially from the circular arc portion and the width of the opening of the recess is smaller than the diameter of the circular arc portion, it is possible to provide an electric actuator of simple structure and low manufacturing cost which can improve the operability of maintenance owing to that a removing tool for the stopper ring can be easily engaged with the recess and prevented from being disengaged from the stopper ring.

It is preferable as defined in claim 2 that the stopper ring has a curved portion formed with at least one vertices at positions symmetric about the notch and the sleeve is securely held under a pressed state by the stopper ring. This makes it possible to generate axial spring force of the stopper ring against the sleeve to apply a predetermined pre-pressure to the sleeve and prevent generation of noise or vibration of the housing.

It is also preferable as defined in claim 3 that the recess of the stopper ring has a contour comprising a circular arc portion formed by a circular arc larger than a semicircle and a flat portion extending tangentially from the circular arc portion and an angle formed between a horizontal line passing through the center of the circular arc portion and a line passing through the center of the circular arc portion and the edge of the opening opposite to the flat portion is within a range 110∼130°.

It is preferable as defined in claim 4 that the recess of the stopper ring has a contour comprising a semicircular arc portion and a flat portion extending tangentially from the semicircular arc portion and each of portions of the opening between a horizontal line passing through the center of the semicircular arc portion and the edge of the opening is formed by a flat surface.

It is also preferable as defined in claim 5 that an angle of the radially outer side corner of the notch of the stopper ring is formed by an obtuse angle. This makes it possible to prevent the angled portion of the radially outer side corner of the notch of the stopper ring from being caught on the groove surface of the annular groove of the housing and thus to prevent the housing from being damaged as well as to smoothly perform the removing operation of the stopper ring.

It is preferable as defined in claim 6 that the sleeve is formed of sintered alloy formed by MIM (Metal Injection Molding). This makes it possible to easily form the sleeve as having a desirable configuration and dimension and high accuracy if the sleeve has a complicated configuration.

### Effects of the Invention

According to the electric actuator of the present invention, since it comprises a housing formed of aluminum light alloy; an electric motor mounted on the housing; a speed reduction mechanism for transmitting rotational driving power of the motor to a ball screw mechanism via a motor shaft; the ball screw mechanism being able to convert the rotational motion of the electric motor to the axial linear motion of a driving shaft and comprising a nut formed with a helical screw groove on its inner circumference and supported rotationally but axially immovably relative to the housing by supporting bearings mounted on the housing and a screw shaft coaxially integrated with the driving shaft, formed with a helical screw groove on its outer circumference corresponding to the helical screw groove of the nut and inserted in the nut via a plurality of balls; and a cylindrical sleeve fitted in a blind bore formed in the housing accommodating the screw shaft; the sleeve being formed on its inner circumference with a pair of axially extending recessed grooves at diametrically opposite positions for receiving a guide pin mounted on one end of the screw shaft to guide the screw shaft so that it is able to move axially but not rotationally relative to the housing and is characterized in that an annular groove is formed on the open end of the blind bore of the housing and the sleeve is axially immovably secured by a annular stopper ring fitted in the annular groove; that the stopper ring is formed with one notch and a recess is formed on the inner circumference of the stopper ring near each of opposite ends of the notch for enabling a detaching tool to be engaged therewith; and that the contour of each recess comprises a circular arc portion having a predetermined radius of curvature and a flat portion extending tangentially from the circular arc portion and the width of the opening of the recess is smaller than the diameter of the circular arc portion, it is possible to provide an electric actuator of simple structure and low manufacturing cost which can improve the operability of maintenance owing to that a removing tool for the stopper ring can be easily engaged with the recess and prevented from being disengaged from the stopper ring.

### Brief description of the Drawings

[Fig. 1] A longitudinal sectional view showing one preferable embodiment of an electric actuator of the present invention;
[Fig. 2] An enlarged longitudinal sectional view showing the ball screw mechanism of Fig. 1;
[Fig. 3] A cross-sectional view taken along a line III-III of Fig. 1;
[Fig. 4(a)] A front elevation view showing a stopper ring of the present invention;
[Fig. 4(b)] A cross-sectional view of the stopper ring of Fig. 4(a);
[Fig. 4(c)] An enlarged view of a IV part of Fig. 4(b);
[Fig. 5] An enlarged view of a V part of Fig. 4(a);
[Fig. 6] An explanatory view showing a method for measuring the axial spring load applied to the stopper ring;
[Fig. 7] A partially enlarged view showing a modification of the stopper ring of Fig. 5;
[Fig. 8] A longitudinal sectional view showing an electric actuator of the prior art; and
[Fig. 9] A longitudinal sectional view showing another electric actuator of the prior art.

### Mode for carrying out the Invention

One mode for carrying out the present invention is an electric actuator comprising a cylindrical housing formed of aluminum light alloy; an electric motor mounted on the housing; a speed reduction mechanism for transmitting rotational driving power of the motor to a ball screw mechanism via a motor shaft; the ball screw mechanism being able to convert the rotational motion of the electric motor to the axial linear motion of a driving shaft and comprising a nut formed with a helical screw groove on its inner circumference and supported rotationally but axially immovably relative to the housing by supporting bearings mounted on the housing and a screw shaft coaxially integrated with the driving shaft, formed with a helical screw groove on its outer circumference corresponding to the helical screw groove of the nut and inserted in the nut via a plurality of balls; and a cylindrical sleeve fitted in a blind bore formed in the housing accommodating the screw shaft; the sleeve being formed on its inner circumference with a pair of axially extending recessed grooves at diametrically opposite positions for receiving a guide pin mounted on one end of the screw shaft to guide the screw shaft so that it is able to move axially but not rotationally relative to the housing characterized in that an annular groove is formed on the open end of the blind bore of the housing and the sleeve is axially immovably secured by a annular stopper ring having a curved portion formed with a vertex at a position symmetric about the notch; that the stopper ring is formed with one notch and a recess is formed on the inner circumference of the stopper ring near each of opposite ends of the notch for enabling a detaching tool to be engaged therewith; and that the contour of each recess comprises a circular arc portion having a predetermined radius of curvature and a flat portion extending tangentially from the circular arc portion and the width of the opening of the recess is smaller than the diameter of the circular arc portion.

### Embodiment

One preferred embodiment of the present invention will be hereinafter described with reference to the drawings.

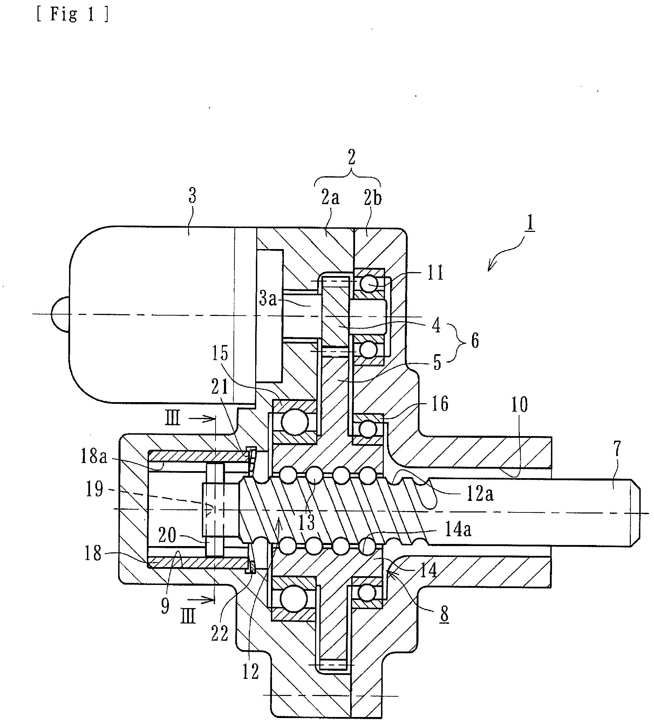

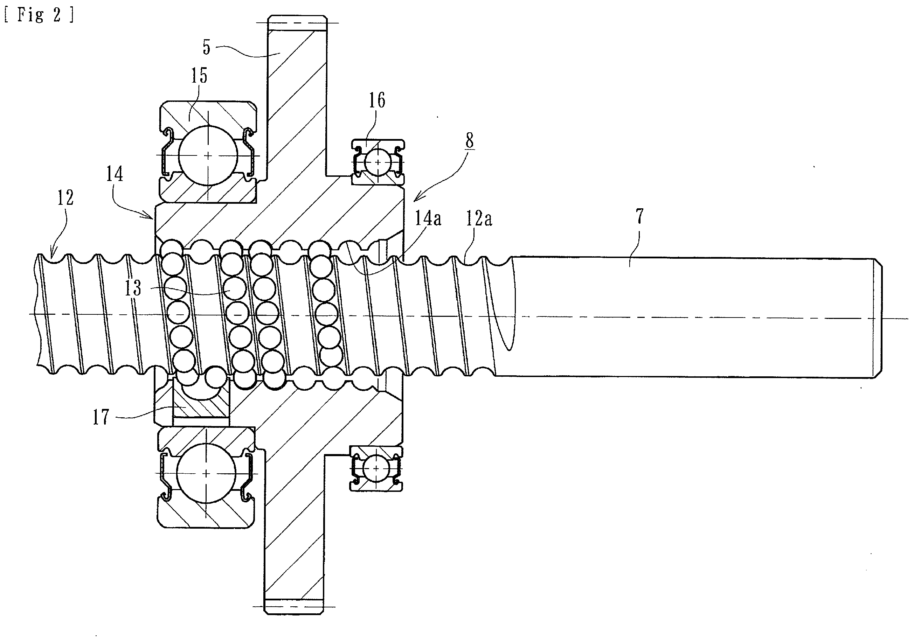

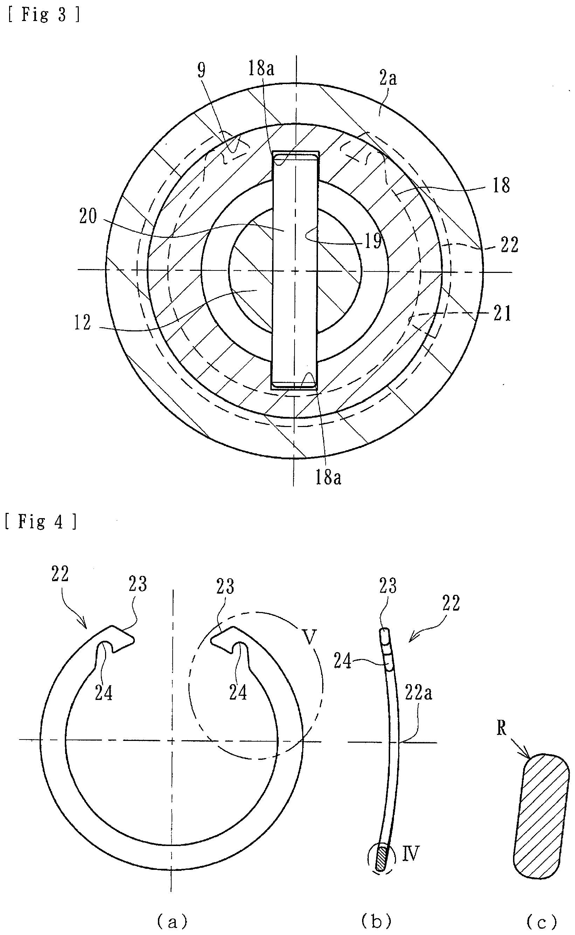

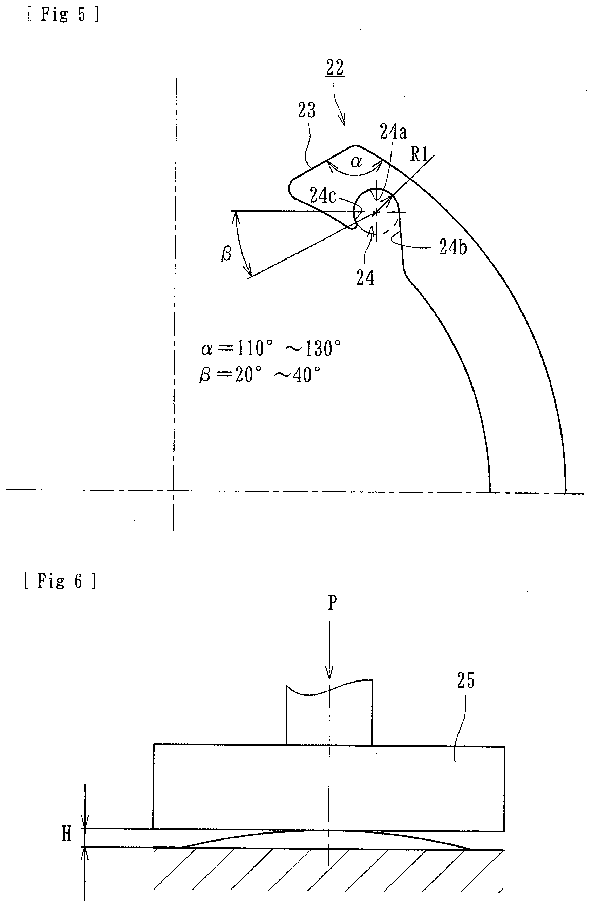

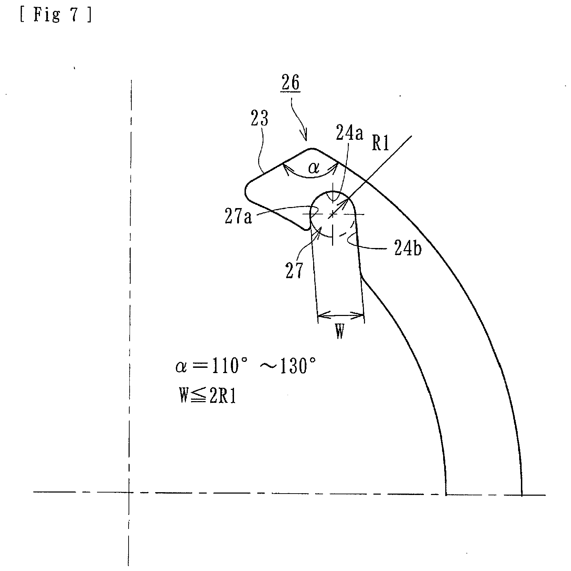

Fig. 1 is a longitudinal sectional view showing one preferable embodiment of an electric actuator of the present invention; Fig. 2 is an enlarged longitudinal sectional view showing the ball screw mechanism of Fig. 1; Fig. 3 is a cross-sectional view taken along a line III-III of Fig. 1; Fig. 4(a) is a front elevation view showing a stopper ring of the present invention; Fig. 4(b) is a cross-sectional view of the stopper ring of Fig. 4(a); Fig. 4(c) is an enlarged view of a IV part of Fig. 4(b); Fig. 5 is an enlarged view of a V part of Fig. 4(a); Fig. 6 is an explanatory view showing a method for measuring the axial spring load applied to the stopper ring; and Fig. 7 is a partially enlarged view showing a modification of the stopper ring of Fig. 5.

As shown in Fig. 1, the electric actuator 1 comprises a cylindrical housing 2, an electric motor 3 mounted on the housing 2, a speed reduction mechanism 6 comprising a pair of spur gears 4, 5 for transmitting the rotational driving power of the motor 3 via its motor shaft 3a and a ball screw mechanism 8 for converting rotational motion of the electric motor 3 to axial linear motion of a driving shaft 7 via the speed reduction mechanism 6.

The housing 2 is formed of aluminum alloy such as A 6063 TE, ADC 12 etc. and comprises a first housing 2a and a second housing 2b abutted against an end face of the first housing 2a and bolted thereto. The electric motor 3 is mounted on the first housing 2a. The first housing 2a and the second housing 2b are formed with a blind bore 9 and a through bore 10 respectively for accommodating the screw shaft 12.

The smaller spur gear 4 is press-fitted onto the end of the motor shaft 3a of the electric motor 3 so as not to be relatively rotated and rotationally supported by a rolling bearing 11 mounted on the second housing 2b. The larger spur gear 5 mating with the smaller spur gear 4 is formed integrally with a nut 14 forming part of the ball screw mechanism 8. The driving shaft 7 is coaxially integrated with the screw shaft 12 forming another part of the ball screw mechanism 8.

As shown in the enlarged view of Fig. 2, the ball screw mechanism 8 comprises the screw shaft 12 and the nut 14 mated with the screw shaft 12 via balls 13. The screw shaft 12 is formed on its outer circumference with a helical screw groove 12a and supported axially movably but not rotationally. On the other hand, the nut 14 is formed on its inner circumference with a helical screw groove 14a corresponding the screw groove 12a of the screw shaft 12 and a large number of balls 13 are accommodated between the screw grooves 12a and 14a. The nut 14 is supported by two supporting bearings 15, 16 rotationally but axially immovably relative to the housings 2. A numeral 17 denotes a bridge member for connecting opposite ends of the screw groove 14a of the nut 14 to achieve an endless circulating passage of balls 13.

The cross-sectional configuration of each screw groove 12a, 14a may be either one of circular-arc or Gothic-arc configuration. However, the Gothic-arc configuration is adopted in this embodiment since it can have a large contacting angle with the ball 13 and set a small axial gap. This enables to have large rigidity against the axial load and thus to suppress generation of vibration.

The nut 14 is formed of case hardened steel such as SCM 415 or SCM 420 and its surface is hardened to HRC 55∼62 by vacuum carburizing hardening. This enables to omit operations such as buffing for scale removal after heat treatment and thus to reduce the manufacturing cost. On the other hand, the screw shaft 12 is formed of medium carbon steel such as S55C or case hardened steel such as SCM 415 or SCM 420 and its surface is hardened to HRC 55∼62 by induction hardening or carburizing hardening.

The larger spur gear 5 is integrally formed with the outer circumference of the nut 14 and the supporting bearings 15, 16 are press-fitted on the nut 14 at both sides of the larger spur gear 5 via a predetermined interference. This makes it possible to prevent an axial movement of the supporting bearings 15, 16 and the larger spur gear 5 even if a thrust load is applied to them. In addition, Each supporting bearing 15, 16 comprises a deep groove ball bearing on both sides of which is mounted shield plates for preventing lubricating grease sealed within the bearing body from being leaked outside and abrasive debris from entering into the bearing body from outside. The larger spur gear 5 may be formed separately from the nut 14 and secured on the nut 14 via a key.

In the illustrated embodiment, a cylindrical sleeve 18 is fitted in the blind bore 9 of the first housing 2a. The sleeve 18 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted state and finally formed to the sleeve by a so-called MIM (Metal Injection Molding). The MIM method can easily mold sintered alloy material to article having desirable accurate configurations and dimensions although the article require high manufacturing technology and have configurations hard to form.

One example of metallic powder for the sintering alloy able to be carburized is SCM415 comprising C of 0.13 wt%, Ni of 0.21 wt%, Cr of 1.1 wt%, Cu of 0.04 wt %, Mn of 0.76 wt%, Mo of 0.19 wt%, Si of 0.20 wt% and remainder Fe etc. The sleeve 18 is cementation quenched and tempered with controlling temperature. Other materials may be used for the sleeve 18, for example, material superior in workability and corrosion resistance and comprising Ni of 3.0∼10.0 wt% (FEN 8 of Japanese powder metallurgy industry standard) or stainless steel SUS 630 of precipitation hardening comprising C of 0.07 wt%, Cr of 17 wt%, Ni of 4 wt%, Cu of 4 wt%, remainder Fe etc. This stainless steel SUS 630 is able to properly increase its surface hardness to 20∼33 HRC by solid-solution heat treatment to obtain both the high toughness and hardness. It is possible to increase the strength and wear resistance of the sleeve 18 and thus its durability higher than those of the first housing 2a formed of aluminum alloy by adopting materials described above to the sleeve 18.

As shown in Figs. 1 and 3, the sleeve 18 is formed with a pair of axially extending recessed grooves 18a, 18a on the inner circumference of the sleeve 18 and arranged radially opposed each other. On the other hand, a radially extending through aperture 19 is formed on the end of the screw shaft 12 and a guide pin 20 is fitted in the through aperture 19. The guide pin 20 is engaged with the recessed grooves 18a, 18a to axially guide and prevent rotation of the screw shaft 12. An annular groove 21 is formed on an opening of the blind bore 9 and the sleeve is axially positioned and secured by a stopper ring 22 fitted in the annular groove 21.

The guide pin 20 may be constituted by a needle roller used in needle bearings which is easily available and low cost and superior in wear resistance and shear strength. More particularly, since the outer circumferential surface of the needle roller is crowned, it is possible to prevent edge load in contact against the recessed grooves 18a, 18a of the sleeve 18 and thus to improve the durability for a long term.

As described above, since the guide pin 20 of the screw shaft 12 is engaged with the recessed grooves 18a, 18a of the sleeve made of strong sintered alloy, it is possible to reduce the sliding friction and wear of the first housing 2a made of aluminum alloy and thus provide an electric actuator which has tough strength and a simple structure and can be manufactured at a low cost.

The stopper ring 22 is mounted in the annular groove 21 formed in the opening of the blind bore 9 of the first housing 2a. Axial movement of the sleeve 18 can be prevented by abutment of the stopper ring 22 against the sleeve 18. The stopper ring 22 is formed of hard steel wire such as SWRH67A (JIS G3506) and has configuration of an ended ring so as to be deformable both in circumferential and radial directions as shown in Fig. 4(a). The stopper ring 22 is formed on its inner circumference near each of opposite ends of the notch 23, 23 with a recess 24 for enabling a tool (e.g. circlip plier) to be engaged. Then, if the stopper ring 22 is elastically deformed so as to reduce the outer diameter of its outer peripheral portion by this tool and inserted into the annular groove of the blind bore, it is secured by elastic returning force..

In addition as shown in Fig. 4(b), the stopper ring 22 has a curved portion 22a formed with at least one vertices (one vertex at the center of the stopper ring 22 in the illustrated embodiment) at positions symmetric about the notch 23 and the sleeve is securely held under a pressed state by the stopper ring 22. This makes it possible to generate axial spring force of the stopper ring 22 against the sleeve 18 to apply a predetermined pre-pressure to the sleeve 18 and prevent generation of noise or vibration of the housing 2. Furthermore as shown in Fig. 4(c), four corner edges of a cross-section of the stopper ring 22 are rounded to a radius R. This can be simply achieved without necessity of after treatment if the stopper ring is press-formed of steel wires corners of which are previously rounded. Thus, the mass productivity can be improved. The stopper ring 22 may be press-formed e.g. of austenitic stainless steel sheet (JIS SUS304 system) or preserved cold rolled steel sheet (JIS SPCC system) other than those described above.

As shown in the enlarged view of Fig. 5, an angle α of the radially outer side corner of the notch 23 of the stopper ring 22 is formed by an obtuse angle, more particularly 110∼130°. This makes it possible to prevent the angled portion of the radially outer side corner of the notch 23 of the stopper ring 22 from being caught on the groove surface of the annular groove 21 of the housing 2a and thus to prevent the housing 2a from being damaged as well as to smoothly perform the removing operation of the stopper ring 22.

The recess 24 of the stopper ring 22 has a contour comprising a circular arc portion 24a having a predetermined radius of curvature R1 and a flat portion 24b extending tangentially from the circular arc portion 24a. The circular arc portion 24a is larger than a semicircle. More particularly, an angle β formed between a horizontal line passing through the center of the circular arc portion 24a and a line passing through the center of the circular arc portion 24a and the edge of the opening 24c opposite to the flat portion 24b is within a range 20∼40°. This enables a tool to be more easily engaged with the recess 24 and to prevent the tool from easily slipped off from the stopper ring 22 and accordingly to improve the workability.

The axial spring load of the stopper ring 22 of the present invention is measured by sampling inspection as shown in Fig. 6. The axial spring load P is set at a value larger than 37 N at a height H (e.g. 2.2 mm) after compression to the thickness of the stopper ring 22 by measuring presser 25. This makes it possible to prevent the permanent set-in fatigue of the stopper ring 22 caused by repeatedly applied axial load and thus to improve the reliability of the stopper ring 22.

A stopper ring 26 shown in Fig. 7 is a modification of the stopper ring 22 described above. This stopper ring 26 is different from the stopper ring 22 only in configuration of the opening 24c and accordingly same reference numerals are used to same parts in this modification as those in the stopper ring 22.

The stopper ring 26 is constituted of an ended ring deformable both in circumferential and radial directions, press-formed of preserved cold rolled steel sheet and is formed on its inner circumference near each of opposite ends of the notch 23, 23 with a recess 27. The recess 27 has a contour comprising a circular arc portion 24a having a predetermined radius of curvature R1 and a flat portion 24b extending tangentially from the circular arc portion 24a. The circular arc portion 24a is a semicircle and each of portions of the opening 27a between a horizontal line passing through the center of the circular arc portion 24a and the edge of the opening 27a is formed by a flat surface and the width W of the opening 27a is set at a dimension equal to or smaller than 2R1 (W≦2R1). This enables a removing tool for the stopper ring to be easily engaged with the recess 27 and prevented from being disengaged from the stopper ring 26.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The electric actuator of the present invention can be used to electric motors for a general industry use, driving portions of an automobile etc. and applied to an electric actuator provided with a ball screw mechanism for converting a rotational input motion from an electric motor to a linear motion of a driving shaft via a speed reduction mechanism.

### Description of Reference numerals

1 electric actuator
2 housing
2a first housing
2b second housing
3 electric motor
3a motor shaft
4 smaller spur gear
5 larger spur gear
6 speed reduction mechanism
7 driving shaft
8 ball screw mechanism
9 blind bore
10, 19 through bore
11 rolling bearing
12 screw shaft
12a, 14a screw groove
13 ball
14 nut
15, 16 supporting bearing
17 bridge member
18 sleeve
18a recessed groove
20 guide pin
21 annular groove
22, 26 stopper ring
22a curved portion
23 notched portion
24,27 recess
24a circular arc portion
24b flat portion
24c, 27a opening
25 measuring presser
50, 63 electric actuator
51 ball screw shaft
51a, 52a, 73a, 74a screw groove
52 ball screw nut
53 ball screw
54, 55 housing
56, 57 rolling bearing
58 securing cover
59 rotation locking member
60 larger diameter portion of nut
61 flat portion
62 cam follower
64 housing
64a first housing
64b second housing
65 electric motor
65a motor shaft
66 smaller spur gear
67 larger spur gear
68 speed reduction mechanism
69 driving shaft
70 ball screw mechanism
71 blind bore
72, 79 through bore
73 nut
74 screw shaft
75 ball
76, 77 supporting bearing
78 sleeve
78a recessed groove
80 guide pin
81 annular groove
82 stopper ring
H height of stopper ring on recompression
P axial spring load
W width of opening of stopper ring
α angle of corner of stopper ring
β angle between horizontal line passing through center of circular arc portion and opening

## Claims

1. An electric actuator comprising:
a housing (2) formed of aluminum light alloy;
an electric motor (3) mounted on the housing (2);
a speed reduction mechanism (6) for transmitting rotational driving power of the motor (3) to a ball screw mechanism (8) via a motor shaft (3a); the ball screw mechanism (8) being able to convert the rotational motion of the electric motor (3) to the axial linear motion of a driving shaft (7) and comprising a nut (14) formed with a helical screw groove (14a) on its inner circumference and supported rotationally but axially immovably relative to the housing (2) by supporting bearings (15, 16) mounted on the housing (2) and a screw shaft (12) coaxially integrated with the driving shaft (7), formed with a helical screw groove (12a) on its outer circumference corresponding to the helical screw groove (14a) of the nut (14) and inserted in the nut (14) via a plurality of balls (13); and
a cylindrical sleeve (18) fitted in a blind bore (9) formed in the housing (2) accommodating the screw shaft (12a); the sleeve (18) being formed on its inner circumference with a pair of axially extending recessed grooves (18a) at diametrically opposite positions for receiving a guide pin (20) mounted on one end of the screw shaft (12) to guide the screw shaft (12) so that it is able to move axially but not rotationally relative to the housing (2) **characterized in**:
**that** an annular groove (21) is formed on the open end of the blind bore (9) of the housing (2) and the sleeve (18) is axially immovably secured by a annular stopper ring (22 or 26) fitted in the annular groove (21);
**that** the stopper ring (22 or 26) is formed with one notch and a recess (24 or 27) is formed on the inner circumference of the stopper ring (22 or 26) near each of opposite ends of the notch for enabling a detaching tool to be engaged therewith; and
**that** the contour of each recess (24 or 27) comprises a circular arc portion (24a) having a predetermined radius of curvature and a flat portion (24b) extending tangentially from the circular arc portion (24a) and the width (W) of the opening (27a) of the recess (24 or 27) is smaller than the diameter of the circular arc portion (24a).

2. An electric actuator of claim 1 wherein the stopper ring (22) has a curved portion (22a) formed with at least one vertices at positions symmetric about the notch and the sleeve (18) is securely held under a pressed state by the stopper ring (22).

3. An electric actuator of claim 1 or 2 wherein the recess (24) of the stopper ring (22) has a contour comprising a circular arc portion (24a) formed by a circular arc larger than a semicircle and a flat portion (24b) extending tangentially from the circular arc portion (24a) and an angle (β) formed between a horizontal line passing through the center of the circular arc portion (24a) and a line passing through the center of the circular arc portion (24a) and the edge of the opening (24c) opposite to the flat portion (24b) is within a range 110∼130°.

4. An electric actuator of claim 1 or 2 wherein the recess (27) of the stopper ring (26) has a contour comprising a semicircular arc portion (24a) and a flat portion (24b) extending tangentially from the semicircular arc portion (24a) and each of portions of the opening (27a) between a horizontal line passing through the center of the semicircular arc portion (24a) and the edge of the opening (27a) is formed by a flat surface.

5. An electric actuator of claim 1 wherein an angle (α) of the radially outer side corner of the notch of the stopper ring (22 or 26) is formed by an obtuse angle.

6. An electric actuator of claim 1 wherein the sleeve (18) is formed of sintered alloy formed by MIM (Metal Injection Molding).
